# EUROPEAN PATENT SPECIFICATION

(11) **EP 3 211 959 B1**
(45) Date of publication and mention of the grant of the patent: **08.07.2020**
(21) Application number: 17150082.0
(22) Date of filing: 03.01.2017
(51) Int. Cl.: H04W 76/14, H04W 72/12, H04W 76/23

(54) **METHOD, APPARATUS, AND COMPUTER PROGRAM PRODUCT FOR ESTABLISHING A MIX OF D2D DIRECT AND CELLULAR COMMUNICATION LINKS BETWEEN TWO DEVICES FOR INTERACTION**
VERFAHREN, VORRICHTUNG UND COMPUTERPROGRAMM ZUR EINRICHTUNG EINER MISCHUNG AUS D2D-DIREKT- UND ZELLULARKOMMUNIKATIONSVERBINDUNGEN ZWISCHEN ZWEI VORRICHTUNGEN ZUR INTERAKTION
PROCÉDÉ, APPAREIL ET PRODUIT DE PROGRAMME INFORMATIQUE PERMETTANT D'ÉTABLIR UN MÉLANGE DE LIAISONS DE COMMUNICATION DE DISPOSITIF À DISPOSITIF DIRECTE ET CELLULAIRE ENTRE DEUX DISPOSITIFS POUR INTERACTION

(30) Priority: 02.02.2016 IN 201641003587
(43) Date of publication of application: 30.08.2017
(73) Proprietor: Nokia Technologies Oy, 02610 Espoo (FI)
(72) Inventor: KUMAR P R, Ajith, 635109 Tamil Nadu (IN); GINMAN, Tommy, 02430 Masala (FI)
(74) Representative: Nokia EPO representatives

(56) References cited:
- EP-A2- 2 544 382
- WO-A1-2015/173784
- US-A1- 2012 014 334
- QIAO JIAN ET AL: "Enabling device-to-device communications in millimeter-wave 5G cellular networks", IEEE COMMUNICATIONS MAGAZINE, IEEE SERVICE CENTER, PISCATAWAY, US, vol. 53, no. 1, 1 January 2015 (2015-01-01), pages 209-215, XP011570619, ISSN: 0163-6804, DOI: 10.1109/MCOM.2015.7010536 [retrieved on 2015-01-14]
- KIM JOONGHEON ET AL: "Quality-aware millimeter-wave device-to-device multi-hop routing for 5G cellular networks", 2014 IEEE INTERNATIONAL CONFERENCE ON COMMUNICATIONS (ICC), IEEE, 10 June 2014 (2014-06-10), pages 5251-5256, XP032632079, DOI: 10.1109/ICC.2014.6884155 [retrieved on 2014-08-26]

## Description

### FIELD:

The technology field relates to wireless wide-area networks, and more particularly to wide-area network data offloading.

### BACKGROUND:

Modern society has adopted, and is becoming reliant upon, wireless communication devices for various purposes, such as, connecting users of the wireless communication devices with other users. Wireless communication devices can vary from battery powered handheld devices to stationary household and / or commercial devices utilizing electrical network as a power source. Due to rapid development of the wireless communication devices a number of areas capable of enabling entirely new types of communication applications have emerged.

The 5th generation (5G) wireless communications technology is expected to use high-frequency carriers of between 10 and 300 gigahertz (GHz), in the millimeter-wave band (mmWave), enabling the transmission of higher speed, higher-quality multimedia content. Cellular network architecture is expected to implement the mmWave wireless communications technology, with implementations ranging in size from stationary base stations serving kilometer-sized cells, to portable base stations serving microcells, femtocells or picocells.

Although mmWave radio frequencies provide a significant bandwidth advantage in telecommunications, the high frequency mmWave carriers are subject to rain attenuation and atmospheric absorption during propagation and have a decreased signal penetration through or around obstacles, resulting in a large path loss. High frequency mmWave carriers are highly directional, permitting communication paths to operate close to one another without causing interference. Where a line-of-sight (LOS) path exists between the transmitter and receiver, the advantages of very high speed data transmission using mmWave carriers may be obtained for ranges of up to approximately one kilometer.

The 5th generation (5G) wireless communication may operate on different radio bands including low frequency (< 3 GHz) and high frequency mmWave. The direct device-to-device communication enabled 5G eNB base station may offload high volume cellular traffic onto direct D2D communication between mobile wireless devices or user equipments within range of each other.

It is expected that when two mobile wireless devices communicate with each other through an eNB base station network node, if they are close to each other, they will try to establish a direct device-to-device (D2D) link bypassing the eNB base station. Establishing D2D links between the devices offloads the traffic from the base station and increases spectral efficiency by re-using the resources.

The available mmWave link between a mobile wireless device and a base station and mmWave link between two wireless devices are much faster than the low frequency bands. In some scenarios, even though the devices are within direct device-to-device (D2D) range and they have data to send to each other, it may be better to not establish direct device-to-device (D2D) link in both directions. Such scenarios may include: (1) when there is a stronger cellular line-of-sight (LOS) path between one mobile wireless device and the base station; (2) when one mobile wireless device is closer to the base station than the other device; or (3) when one mobile wireless device is not capable of transmitting a high frequency band. In such scenarios, it may be advantageous to establish a combination of both a high frequency band link from one mobile wireless device to the base station and a low frequency band direct device-to-device (D2D) link between the two mobile wireless devices, to increase the performance, including throughput and delay.

One known solution is presented in EP2544382A2 which presents a method for wideband short-range wireless communication, the method including determining a change of a relay operation type based on a link quality between a source node and a relay node, a link quality between the relay node and the destination node, and a link quality between the source node and the destination node, transmitting a relay operation change (ROC) request message in response to a determination of the change of the relay operation type, and receiving an ROC response message corresponding to the ROC request message.

### SUMMARY:

Method, apparatus, and computer program product example embodiments enable establishing a combination of both a high frequency band link from one mobile wireless device to a base station and a low frequency band direct device-to-device (D2D) link between the two mobile wireless devices, for wide-area network data offloading.

An example embodiment of the invention includes a method comprising:
receiving, by a network node, a request from each of a first and a second wireless device, to schedule a device-to-device direct communication session between the first and second wireless devices, each request including device-to-device channel quality information and device-to-network node channel quality information;
scheduling, by the network node, a mixed communication session comprising a unidirectional, direct device-to-device link to transmit second data from the second wireless device to the first wireless device using a frequency band below 6 Ghz , and a unidirectional link to transmit first data from the first wireless device to the network node using the high frequency band, the network node acting as a relay to forward the first data to the second wireless device, if the device-to-device channel quality information of the first and second wireless devices does not meet a first predefined criterion for the frequency band between 10 and 300 GHz and if the device-to-network node channel quality information for the first wireless device to the network node meets a second predefined criterion for the frequency band between 10 and 300 GHz.

An example embodiment of the invention includes a method comprising:
wherein the mixed communication session further comprises:
scheduling, by the network node, a unidirectional link to forward the first data from the network node to the second wireless device using the frequency band below 6 GHz, if the device-to-network node channel quality information for the second wireless device to the network node does not meet the second predefined criterion for the frequency band between 10 and 300 GHz.

An example embodiment of the invention includes a method comprising:
wherein the mixed communication session further comprises:
scheduling, by the network node, a unidirectional link to forward the first data from the network node to the second wireless device using the frequency band between 10 and 300 GHz, if the device-to-network node channel quality information for the second wireless device to the network node meets the second predefined criterion for the frequency band between 10 and 300 GHz.

An example embodiment of the invention includes a method comprising:
wherein the request from each of the first and second wireless devices includes a buffer status report of a quantity of data each device has to transmit to the other device.

An example embodiment of the invention includes a method comprising:
wherein the scheduling further comprises:
transmitting, by the network node, to the first and second wireless devices, a resource allocation pool comprising a specification of a set of transmission time intervals and frequency resources to be used by the first and second wireless devices for communicating over the scheduled links in the specified transmission time intervals, without requiring the network node to transmit a new schedule during each transmission time interval.

An example embodiment of the invention includes an apparatus comprising:
at least one processor;
at least one memory including computer program code;
the at least one memory and the computer program code configured to, with the at least one processor, cause the apparatus at least to:
   receive a request from each of a first and a second wireless device, to schedule a device-to-device direct communication session between the first and second wireless devices, each request including device-to-device channel quality information and device-to-apparatus channel quality information;
   schedule a mixed communication session comprising a unidirectional, direct device-to-device link to transmit second data from the second wireless device to the first wireless device using a lower frequency band below 6 GHz, and a unidirectional link to transmit first data from the first wireless device to the apparatus using the frequency band between 10 and 300 GHz, the apparatus acting as a relay to forward the first data to the second wireless device, if the device-to-device channel quality information of the first and second wireless devices does not meet a first predefined criterion for the frequency band between 10 and 300 GHz and if the device-to-apparatus channel quality information for the first wireless device to the apparatus meets a second predefined criterion for the frequency band between 10 and 300 GHz.

An example embodiment of the invention includes an apparatus comprising:
wherein the mixed communication session further comprises:
the at least one memory and the computer program code configured to, with the at least one processor, cause the apparatus at least to:
schedule a unidirectional link to forward the first data from the apparatus to the second wireless device using the frequency band below 6 GHz, if the device-to-apparatus channel quality information for the second wireless device to the apparatus does not meet the second predefined criterion for the frequency band between 10 and 300 GHz.

An example embodiment of the invention includes an apparatus comprising:
wherein the mixed communication session further comprises:
the at least one memory and the computer program code configured to, with the at least one processor, cause the apparatus at least to:
schedule a unidirectional link to forward the first data from the apparatus to the second wireless device using the frequency band between 10 and 300 GHz, if the device-to-apparatus channel quality information for the second wireless device to the apparatus meets the second predefined criterion for the frequency band between 10 and 300 GHz.

An example embodiment of the invention includes an apparatus comprising:
wherein the request from each of the first and second wireless devices includes a buffer status report of a quantity of data each device has to transmit to the other device.

An example embodiment of the invention includes an apparatus comprising:
wherein the scheduling further comprises:
the at least one memory and the computer program code configured to, with the at least one processor, cause the apparatus at least to:
transmit to the first and second wireless devices, a resource allocation pool comprising a specification of a set of transmission time intervals and frequency resources to be used by the first and second wireless devices for communicating over the scheduled links in the specified transmission time intervals, without requiring the apparatus to transmit a new schedule during each transmission time interval.

An example embodiment of the invention includes a computer program product comprising computer executable program code recorded on a computer readable, non-transitory storage medium, the computer executable program code comprising:
code for receiving, by a network node, a request from each of a first and a second wireless device, to schedule a device-to-device direct communication session between the first and second wireless devices, each request including device-to-device channel quality information and device-to-network node channel quality information;
code for scheduling, by the network node, a mixed communication session comprising a unidirectional, direct device-to-device link to transmit second data from the second wireless device to the first wireless device using a frequency band below 6 GHz , and a unidirectional link to transmit first data from the first wireless device to the network node using the frequency band between 10 and 300 GHz, the network node acting as a relay to forward the first data to the second wireless device, if the device-to-device channel quality information of the first and second wireless devices does not meet a first predefined criterion for the frequency band between 10 and 300 GHz and if the device-to-network node channel quality information for the first wireless device to the network node meets a second predefined criterion for the frequency band between 10 and 300 GHz.

An example embodiment of the invention includes a computer program product comprising:
code for scheduling, by the network node, a unidirectional link to forward the first data from the network node to the second wireless device using the frequency band below 6 GHz, if the device-to-network node channel quality information for the second wireless device to the network node does not meet the second predefined criterion for the frequency band between 10 and 300 GHz.

An example embodiment of the invention includes a computer program product comprising:
code for scheduling, by the network node, a unidirectional link to forward the first data from the network node to the second wireless device using the frequency band between 10 and 300 GHz, if the device-to-network node channel quality information for the second wireless device to the network node meets the second predefined criterion for the frequency band between 10 and 300 GHz.

An example embodiment of the invention includes a computer program product comprising:
wherein the request from each of the first and second wireless devices includes a buffer status report of a quantity of data each device has to transmit to the other device.

The embodiments that do not fall under the scope of the claims are to be interpreted as examples useful for understanding the disclosure

### DESCRIPTION OF THE FIGURES:

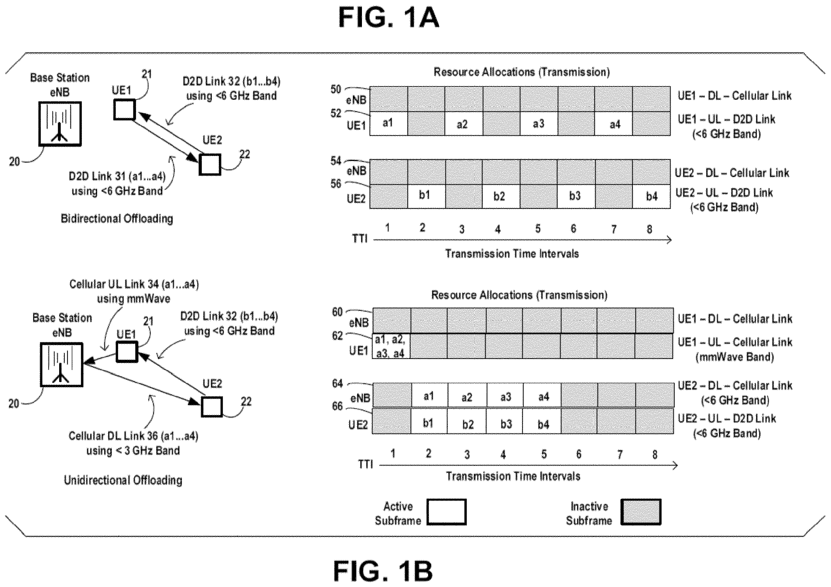

Figure 1A illustrates a cellular network, wherein a bidirectional direct device-to-device (D2D) link is established between a first user equipment UE1 and a second user equipment UE2 located in a cell controlled by a base station eNB. The bidirectional D2D link offloads bidirectional traffic from the base station eNB, which would otherwise be relayed by the base station eNB. The bidirectional direct device-to-device (D2D) link of Figure 1A exchanges lower frequency (<6 GHz) band radio traffic in both directions, from UE1 to UE2 and from UE2 to UE1. In accordance with the invention, the base station eNB is programmed to select between the bidirectional direct device-to-device (D2D) link of Figure 1A and a mixed communication session of Figure 1B, in accordance with the invention.
Figure 1B illustrates the cellular network of Figure 1A, wherein the mixed communication session is established with the lower frequency (<6 GHz) band radio used for unidirectional transmission of traffic from UE2 to UE1, over the D2D link in the direction from UE2 to UE1, and the high frequency mmWave band radio is used for unidirectional transmission of traffic from UE1 to UE2, in the direction from UE1 to the base station eNB, the base station eNB acting as a relay to forward the traffic to UE2, in accordance with the invention.

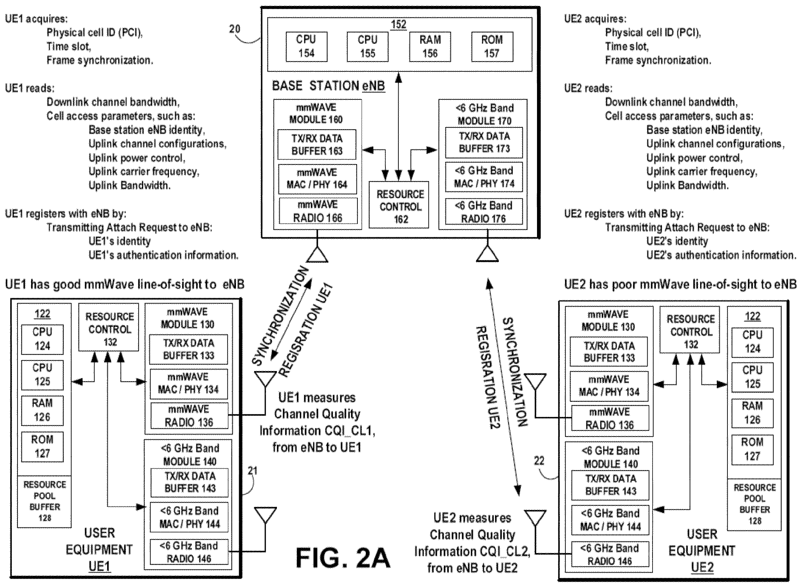

Figure 2A is a network and functional block diagram of the base station eNB and the two user equipment devices UE1 and UE2 located in the cell controlled by the base station eNB, wherein the two user equipment devices UE1 and UE2 synchronize and register with the base station eNB. Device UE1 has a good mmWave line-of-sight to eNB and synchronizes and registers over the mmWave band radio link with the base station eNB. UE1 measures the channel quality information CQI_CL1, from eNB to UE1 for a mmWave channel. Device UE2 has a poor mmWave line-of-sight to eNB and, thus, synchronizes and registers over the lower frequency (<6 GHz) band radio link with the base station eNB. UE2 measures the channel quality information CQI_CL2, from eNB to UE2 for a lower frequency (<6 GHz) band channel, in accordance with the invention.

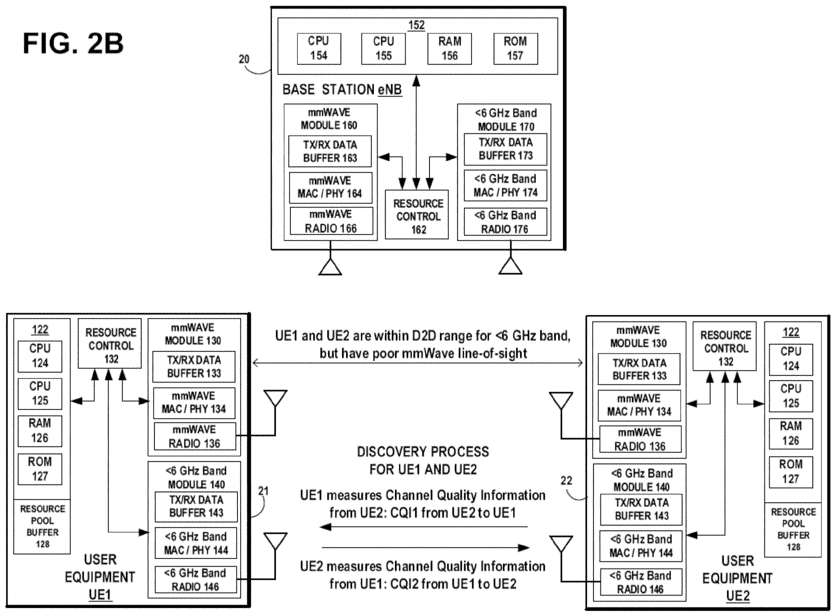

Figure 2B is a network and functional block diagram of the base station eNB and two user equipment devices UE1 and UE2 of Figure 2A, wherein the two user equipment devices engage in a device discovery process. UE1 and UE2 are within D2D range for a lower frequency (<6 GHz) band radio link, but have poor mmWave line-of-sight. Device UE1 measures channel quality information from UE2: CQI1 from UE2 to UE1, for a lower frequency (<6 GHz) band channel. Device UE2 measures channel quality information from UE1: CQI2 from UE1 to UE2, for a lower frequency (<6 GHz) band channel, in accordance with the invention.

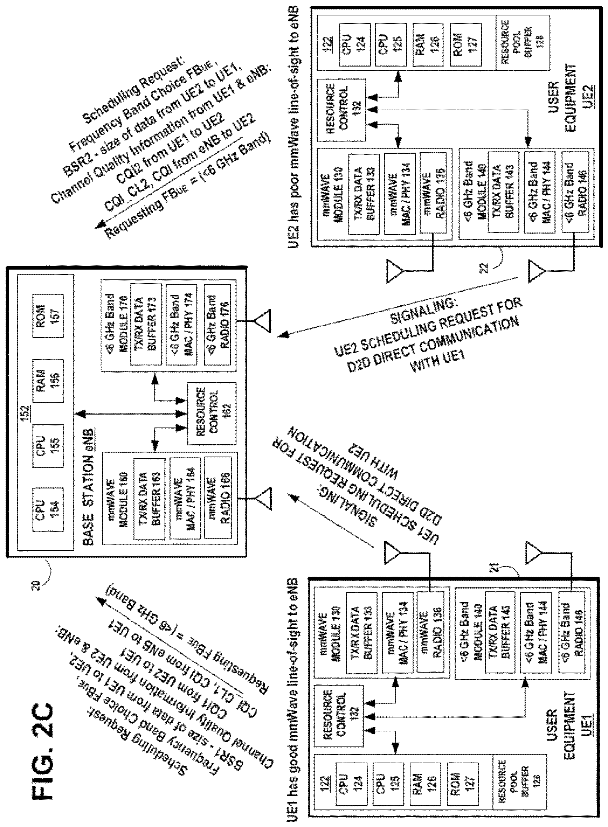

Figure 2C is a network and functional block diagram of the base station eNB and two user equipment devices UE1 and UE2 of Figure 2A, wherein the two user equipment devices transmit scheduling requests for a direct device-to-device (D2D) link to the base station eNB. Device UE1 has a good mmWave line-of-sight to eNB and transmits to eNB over the mmWave band radio link, a scheduling request, including its frequency band choice FB_{UE} = lower frequency (<6 GHz) band, BSR1 size of data from UE1 to UE2, channel quality information from UE2 and eNB: CQI1 from UE2 to UE1 and CQI_CL1, CQI from eNB to UE1. Device UE2 has poor mmWave line-of-sight to eNB and, thus transmits to eNB over the lower frequency (<6 GHz) band radio link, a scheduling request, including its frequency band choice FB_{UE} = lower frequency (<6 GHz) band, BSR2 size of data from UE2 to UE1, channel quality information from UE1 and eNB: CQI2 from UE1 to UE2 and CQI_CL2, CQI from eNB to UE2. The scheduling request from each device, UE1 and UE2, also contains a power headroom report (PHR) of the respective device, in accordance with the invention.

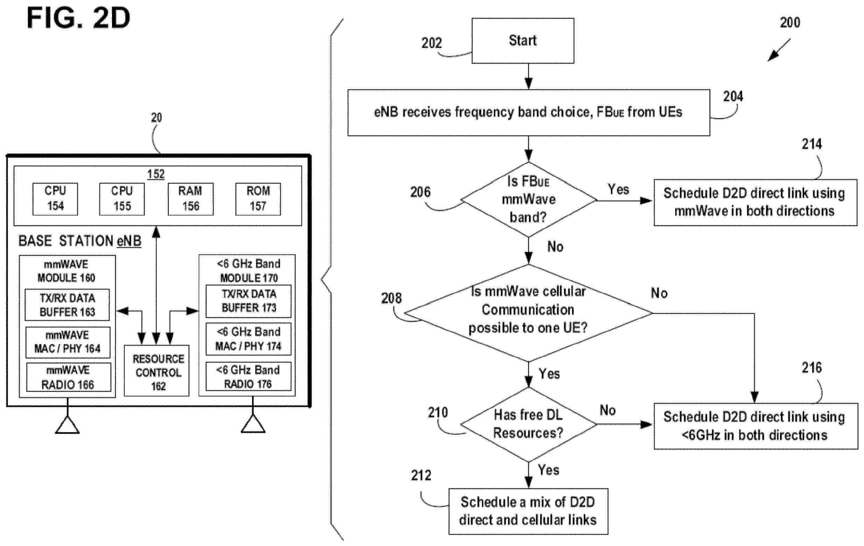

Figure 2D is a functional block diagram of the base station eNB and a flow diagram of a programmed method executed by the base station eNB, to select between the bidirectional direct device-to-device (D2D) link of Figure 1A and a mixed communication session of Figure 1B, in accordance with the invention.

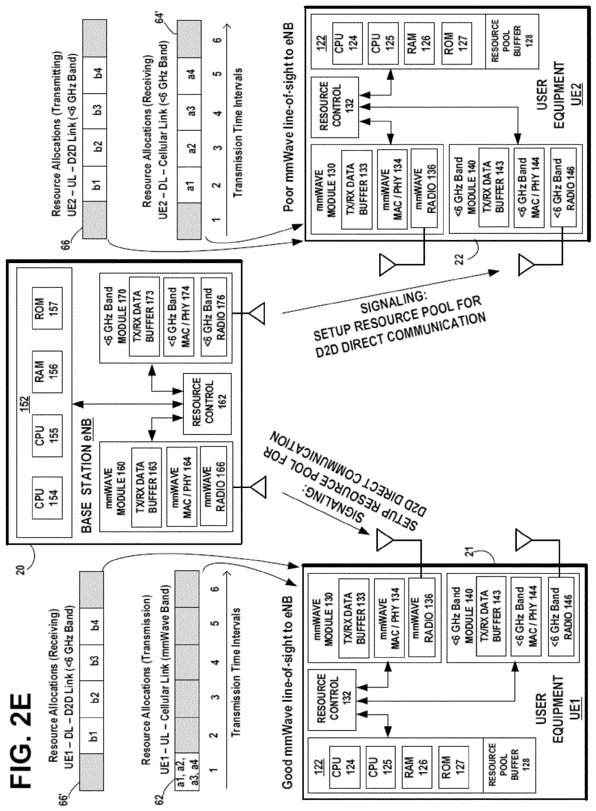

Figure 2E is a network and functional block diagram of the base station eNB and two user equipment devices UE1 and UE2 of Figure 2A, wherein the two user equipment devices receive resource allocations from the base station eNB, to setup a resource pool for the mixed communication session of Figure 1B. Device UE1 has a good mmWave line-of-sight to eNB and receives its resource allocations from the base station eNB over the mmWave band radio link. Device UE2 has poor mmWave line-of-sight to eNB and, thus receives its resource allocations from the base station eNB over the lower frequency (<6 GHz) band radio link, in accordance with the invention.

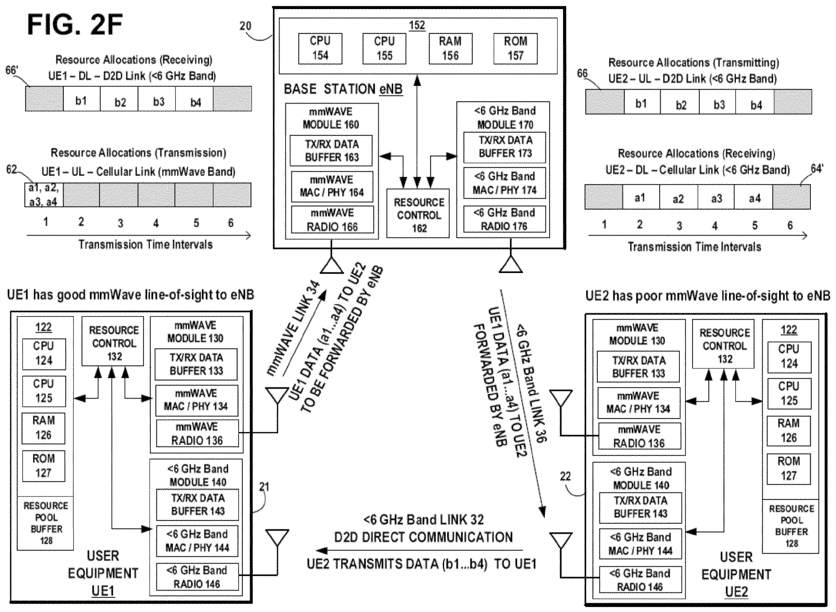

Figure 2F is a network and functional block diagram of the base station eNB and two user equipment devices UE1 and UE2 of Figure 2A, illustrating the mixed communication session of Figure 1B, wherein the lower frequency (<6 GHz) band radio is used for unidirectional transmission of traffic from UE2 to UE1, over the D2D link in the direction from UE2 to UE1, and the high frequency mmWave band radio is used for unidirectional transmission of traffic from UE1 to UE2, in the direction from UE1 to the base station eNB, the base station eNB acting as a relay to forward the traffic to UE2. The lower frequency (<6 GHz) band radio is used for unidirectional transmission of traffic from UE1 to UE2, in the link directed from the base station eNB to UE2, in accordance with the invention.

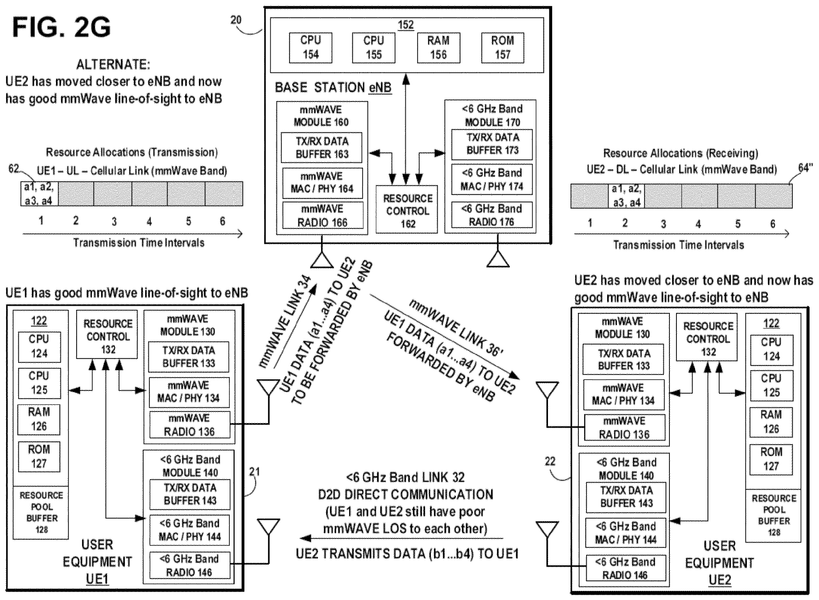

Figure 2G is a network and functional block diagram of the base station eNB and two user equipment devices UE1 and UE2 of Figure 2F, illustrating example effects of the device UE2 moving closer to eNB and now having a good mmWave line-of-sight to eNB. The eNB is then able to use the high frequency mmWave band radio for the unidirectional transmission of the forwarded traffic from UE1 to UE2, in the link directed from the base station eNB to UE2, in accordance with the invention.

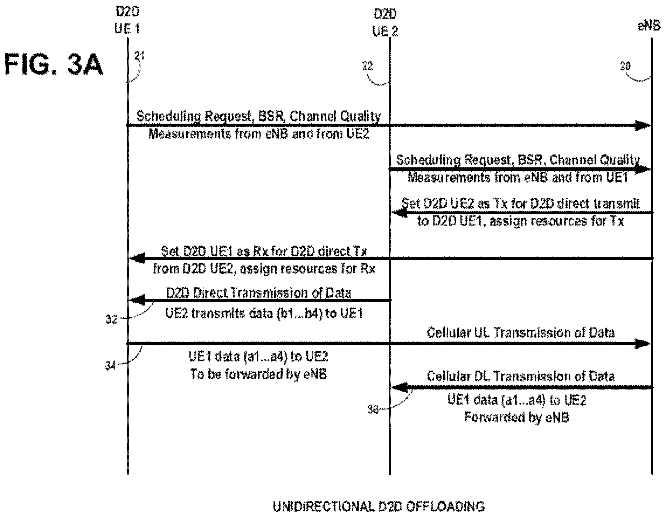

Figure 3A is a signal sequence diagram of the mixed communication session of Figure 1B, wherein the lower frequency (<6 GHz) band radio is used for unidirectional transmission of traffic from UE2 to UE1, over the D2D link in the direction from UE2 to UE1, and the high frequency mmWave band radio is used for unidirectional transmission of traffic from UE1 to UE2, in the direction from UE1 to the base station eNB, the base station eNB acting as a relay to forward the traffic to UE2, in accordance with the invention.

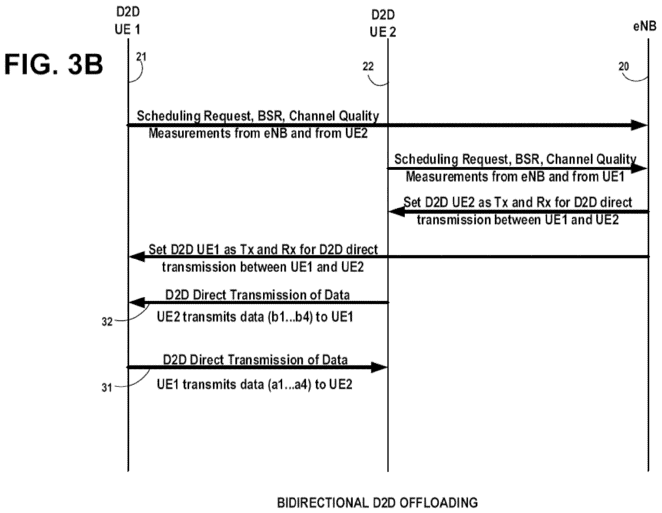

Figure 3B is a signal sequence diagram of the bidirectional direct device-to-device (D2D) link of Figure 1A, between the first user equipment UE2 and the second user equipment UE2 located in the cell controlled by the base station eNB, wherein the base station eNB is programmed to select between the bidirectional direct device-to-device (D2D) link of Figure 1A and a mixed communication session of Figure 1B, in accordance with the invention.

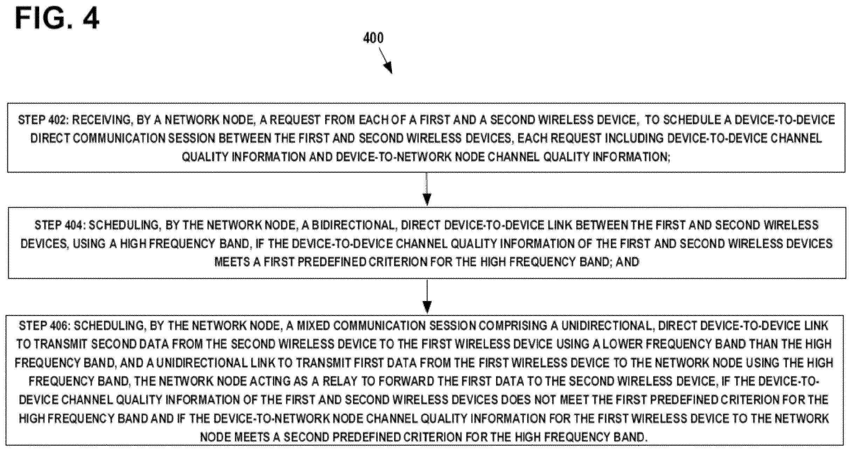

Figure 4 is a flow diagram of a programmed method executed by the base station eNB, to select between the bidirectional direct device-to-device (D2D) link of Figure 1A and a mixed communication session of Figure 1B, in accordance with the invention.

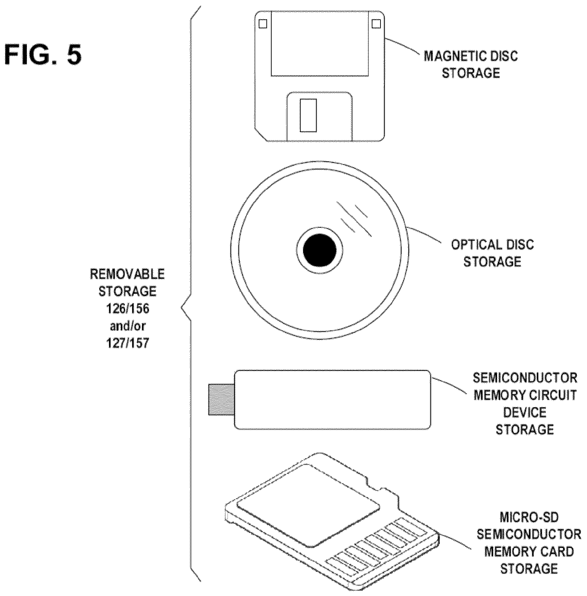

Figure 5 illustrates an example embodiment of the invention, wherein examples of removable storage media are shown, based on magnetic, electronic and/or optical technologies, such as magnetic disks, optical disks, semiconductor memory circuit devices and micro-SD memory cards (SD refers to the Secure Digital standard) for storing data and/or computer program code as an example computer program product, in accordance with at least one embodiment of the present invention.

### DISCUSSION OF EXAMPLE EMBODIMENTS OF THE INVENTION:

In accordance with an example embodiment of the invention, a direct device-to-device (D2D) link may be established in one direction between two participating user equipments (UEs) and a one-hop cellular link in another direction, based on link conditions and buffer status of each UE. The evolved Node B (eNB) base station, after receiving the buffer status of the UEs and a request for D2D communication resources, may decide whether to allocate the resources for two-way D2D communication or a one-way D2D communication with the return path being cellular communication. If a direct line-of-sight (LOS) path is available between one of the UEs to the eNB, a very high throughput mmWave connection may be scheduled between the UE and eNB for fast transfer of data. If the down link (DL) resources are available, the eNB may act as a relay and transfer the return path data to the other UE. In this manner, a higher throughput may be achieved than would have been available by establishing a single direct D2D link for both directions.

Figure 1A illustrates a cellular network, wherein a bidirectional direct device-to-device (D2D) link 31/32 is established between a first wireless user equipment UE1 21 and a second wireless user equipment UE2 22 located in a cell controlled by a base station eNB or network node 20. The bidirectional D2D link 31/32 offloads bidirectional traffic from the base station eNB, which would otherwise be relayed by the base station eNB. The communications technology of the base station eNB may be the 5th generation (5G) wireless communications technology, which operates in both high frequency millimeter wave (mmWave) band and lower frequency (<6 GHz) band. The bidirectional direct device-to-device (D2D) link 31/32 of Figure 1A exchanges lower frequency (<6 GHz) band radio traffic in both directions, from UE2 to UE1 and in the return path from UE1 to UE2.

In accordance with the invention, the base station eNB is programmed to select between the bidirectional direct device-to-device (D2D) link 31/32 of Figure 1A and a mixed communication session 32, 34, and 36 of Figure 1B. In the, mixed communication session of Figure 1B, the lower frequency (<6 GHz) band radio is used for unidirectional transmission of traffic from UE2 to UE1, over the D2D link 32 in the direction from UE2 to UE1, and the high frequency mmWave band radio is used for unidirectional transmission of the return path traffic from UE1 to UE2 over link 34 to the base station eNB. The high frequency mmWave band radio is used for the link 34 in the return path direction from UE1 to the base station eNB. The base station eNB acts as a relay to forward the return path traffic to UE2 over link 36, using the lower frequency (<6 GHz) band radio, in accordance with the invention.

Resource allocations 50, 52, 54, and 56 are generated by the base station eNB for a bidirectional direct device-to-device (D2D) link between the first user equipment UE1 and the second user equipment UE2. The resource allocations are based on the frequency band chosen by the UEs, whether at least one UE is capable of transmitting the high frequency band, and whether the base station eNB has available downlink resources. A resource allocation pool comprises a specification of a set of transmission time intervals (TTI) and frequency resources to be used by the UEs for communicating over the scheduled links in the specified transmission time intervals, without requiring the base station eNB to transmit a new schedule during each transmission time interval.

The bidirectional, direct device-to-device link between the UEs, generated by the base station eNB, is based on the chosen frequency band not being the high frequency band, and either the first and the second UEs are not capable of transmitting the high frequency band, or the base station does not have available downlink resources.

The user equipment devices UE1 and UE2 use the D2D link to transmit data to each other. As shown in the resource allocation 52, at transmission time interval TTI 1, UE1 transmits its packet (a1) to UE2. As shown in the resource allocation 56, at transmission time interval TTI 2, UE2 transmits its packet (b1) to UE1. Thus, at the minimum 8 TTIs are needed to transmit the 4 packets a1, a2, a3 and a4 from UE1 to UE2 and to transmit the 4 packets b1, b2, b3 and b4 from UE2 to UE1. Therefore, the maximum throughput possible with the bidirectional D2D direct link communication is 1 packet/TTI.

In the example shown in Figure 1A, UE1 is closer to the base station eNB and has a better line-of-sight (LOS) with eNB. UE2 is shown further away from eNB and has a poor line-of-sight (LOS) with eNB, but is within a D2D range from UE1. The user equipment devices UE1 and UE2 devices are in proximity to each other and both have data to send to each other. This is an ideal case for offloading D2D communication. The eNB may schedule a direct D2D connectivity 31/32 between the UE1 and UE2 devices and benefit from the traffic offloading. The D2D link 31/32 that may be formed between the UEs is a low frequency band (<6 GHz), for example 700 MHz, 1700 MHz, 1900 MHz, or 2600 MHz band. Four packets a1, a2, a3 and a4 are transmitted from UE1 to UE2 over link 31 using the network allocated uplink resource blocks in resource allocation 52. Similarly the four packets b1, b2, b3 and b4 are transmitted from UE2 to UE1 over link 32 using the network allocated resource blocks in resource allocation 56. A resource block has dimensions of subcarriers in the frequency domain and symbols in the time domain. The packet sizes may be computed based on the allocated resources and the link quality between the two UEs. During one TTI, only one UE may transmit its packet. When one UE is using the assigned resources for transmitting, the receiving UE must listen and may not transmit its packet.

Figure 1B illustrates the cellular network of Figure 1A, wherein the mixed communication session 32, 34, and 36 is established, with the lower frequency (<6 GHz) band radio used for unidirectional transmission of traffic from UE2 to UE1, over the D2D link 32 in the direction from UE2 to UE1, and the high frequency mmWave band radio is used for unidirectional transmission of traffic from UE1 to UE2, in the direction from UE1 to the base station eNB over link 34, the base station eNB acting as a relay to forward the traffic to UE2 over link 36, using the lower frequency (<6 GHz) band radio, in accordance with the invention.

Resource allocations 60, 62, 64, and 66 are generated by the base station eNB for the mixed communication session. The mixed communication session is established with the lower frequency (<6 GHz) band radio used for unidirectional transmission of traffic from UE2 to UE1, over the D2D link 32 in the direction from UE2 to UE1, and the high frequency mmWave band radio is used for unidirectional transmission of traffic from UE1 to UE2, in the direction from UE1 to the base station eNB over link 34, the base station eNB acting as a relay to forward the traffic to UE2 over link 36, in accordance with the invention.

The resource allocations for a mixed communication session generated by the base station eNB, are based on the chosen frequency band not being the high frequency band, at least one UE is capable of transmitting the high frequency band, and the base station eNB has available downlink resources.

The two UEs in Figure 1B, are communicating using the direct D2D link 32 from UE2 to UE1, the cellular uplink 34 using the high frequency mmWave over a good quality line-of-sight (LOS) from UE1 to the base station eNB, and another cellular downlink 36 from eNB to UE2. This is possible when the eNB has available resources in the downlink 36 and if at least one UE has a very good RF signal quality with the eNB, enabling it to use a high a throughput link 34. When the links of Figure 1B are scheduled, then UE1 will be able to transfer all four packets in one TTI using the high throughput link 34 to the eNB. Thus, in Figure 1B, as shown in the resource allocation 62, the UE1 transmits all four packets a1, a2, a3 and a4 over link 34 during TTI. Assuming a normal <6GHz link between the eNB and UE2 in the downlink 36, the eNB may use resource allocation 64 to schedule the next 4 TTIs for relaying these four packet a1, a2, a3 and a4 to UE2 over link 36. The TTIs 2 to 5 may be scheduled for this transmission from eNB to UE2. The transmission from eNB to UE2 may be even faster if more DL resources are available for link 36. During these TTIs 2 to 5, the eNB may use resource allocation 66 to schedule the UE2 transmission of 4 packets b1, b2, b3 and b4 to UE1 over the link 32, using the uplink resources for the D2D link.

Thus, in accordance with the invention, only 5 TTIs are used for transmitting 8 packets between UE1 and UE2 in Figure 1B, and thus the throughput is 8/5 packets per TTI or a gain of about 60%.

Figure 2A is a network and functional block diagram of the base station eNB 20 and the two user equipment devices UE1 21 and UE2 22 located in the cell controlled by the base station eNB 20, wherein the two user equipment devices UE1 and UE2 synchronize and register with the base station eNB. Device UE1 has a good mmWave line-of-sight to eNB and synchronizes and registers over the mmWave band radio link with the base station eNB. UE1 measures the channel quality information CQI_CL1, from eNB to UE1 for a mmWave channel. Device UE2 has a poor mmWave line-of-sight to eNB and, thus, synchronizes and registers over the lower frequency (<6 GHz) band radio link with the base station eNB. UE2 measures the channel quality information CQI_CL2, from eNB to UE2 for a lower frequency (<6 GHz) band channel, in accordance with the invention.

The channel quality information CQI_CL1, from eNB to UE1 for a mmWave channel may be an observed signal-to-interference-plus-noise ratio (SINR) of pilot or reference signals received at the UE1. The channel quality information CQI_CL2, from eNB to UE2 for a lower frequency (<6 GHz) band channel may be an observed signal-to-interference-plus-noise ratio (SINR) of pilot or reference signals received at the UE2.

The user devices UE1 and UE2 are mobile wireless devices compatible with the 5th generation (5G) wireless communications technology, which operates in both high frequency millimeter wave (mmWave) band and lower frequency (<6 GHz) band. The user devices UE1 and UE2 each include a processor module 122, a resource pool buffer 128, a mmWave module 130, a lower frequency (<6 GHz) module 140, and a resource control 132.

The processor module 122 may include a dual core or multi-core central processing unit 124 and 125, a random access memory (RAM) 126, a read only memory (ROM) 127, and interface circuits to interface with the mmWave module 130 and <6 GHz band module 140, battery or mains power and optionally other power sources. The processor module components may be embodied as hardware, firmware, or software. In an example embodiment of the invention, the user devices UE1 and UE2 may also optionally include one or more of a key pad, touch screen, display, microphone, speakers, ear pieces, camera or other imaging devices, etc. The RAM and ROM may be removable memory devices, such as smart cards, SIMs, WIMs, semiconductor memories such as RAM, ROM, PROMS, flash memory devices, etc.

The resource pool buffer 128 buffers resource allocations 50, 52, 54, and 56 received from the base station eNB for a bidirectional direct device-to-device (D2D) link of Figure 1A and the resource allocations 60, 62, 64, and 66 received from the base station eNB for the mixed communication session of Figure 1B.

The mmWave module 130 may include transmit and receive data buffers TX/RX 133, mmWave media access control (MAC)/physical layer (PHY) 134, and mmWave radio 136 transceiver for high-frequency carriers of between 10 and 300 gigahertz (GHz), in the millimeter-wave band. The mmWave module components may be embodied as hardware, firmware, or software.

The lower frequency (<6 GHz) module 140 may include transmit and receive data buffers TX/RX 143, <6 GHz band media access control (MAC)/physical layer (PHY) 144, and <6 GHz band radio 146 transceiver for lower frequency (<6 GHz) band radio. The <6 GHz band module components may be embodied as hardware, firmware, or software.

The resource control 132 responds to the resource allocations in the resource pool buffer 128 received from the base station eNB, to control the mmWave module 130 and the <6 GHz band module 140 in accordance with the specified set of transmission time intervals and frequency resources to be used by the UEs for communicating over the scheduled links in the specified transmission time intervals.

The base station eNB is compatible with the 5th generation (5G) wireless communications technology, which operates in both high frequency millimeter wave (mmWave) band and lower frequency (<6 GHz) band. The base station eNB includes a processor module 152, a mmWave module 160, a lower frequency (<6 GHz) module 170, and a resource control 162.

The processor module 152 may include a dual core or multi-core central processing unit 154 and 155, a random access memory (RAM) 156, a read only memory (ROM) 157, and interface circuits to interface with the mmWave module 160 and <6 GHz band module 170, mains power and optionally other power sources. The processor module components may be embodied as hardware, firmware, or software. The RAM and ROM may be removable memory devices, such as smart cards, SIMs, WIMs, semiconductor memories such as RAM, ROM, PROMS, flash memory devices, etc.

The mmWave module 160 may include transmit TX and receive data buffers TX/RX 163, mmWave media access control (MAC)/physical layer (PHY) 164, and mmWave radio 166 transceiver for high-frequency carriers of between 10 and 300 gigahertz (GHz), in the millimeter-wave band. The mmWave module components may be embodied as hardware, firmware, or software.

The lower frequency (<6 GHz) module 170 may include transmit TX and receive data buffers TX/RX 173, <6 GHz band media access control (MAC)/physical layer (PHY) 174, and <6 GHz band radio 176 transceiver for lower frequency (<6 GHz) band radio. The <6 GHz band module components may be embodied as hardware, firmware, or software.

The resource control 162 generates the resource allocations of transmission time intervals and frequency resources to be used by the UEs for communicating over the scheduled links in the specified transmission time intervals. The resource allocations are transmitted by the mmWave module 160 of the base station eNB to control the mmWave module 130 and the <6 GHz band module 140 in the user equipment devices UE1 and UE2.

When the UE wishes to camp on any cell, it begins by synchronizing with the cell to acquire the physical cell ID (PCI), time slot and frame synchronization. For cell synchronization, the UEs under the coverage of eNB, may use the synchronization signal transmitted by the mmWave module 160 or the lower frequency (<6 GHz) band module 170 of the base station eNB. After completing initial cell synchronization, the UE reads information blocks for the downlink channel bandwidth and cell access parameters, such as the base station eNB identity, Uplink physical channel configurations, Uplink power control, and Uplink carrier frequency and Bandwidth. The UE may then register with the eNB by transmitting an Attach Request to the eNB, which includes the UE's identity and authentication information. The UE may measure the Channel Quality Information of the mmWave signals or the lower frequency (<6 GHz) band signals from the eNB, indicating the channel quality and line-of-sight (LOS) propagation characteristics to the eNB.

In a D2D enabled cellular network, the two UEs have to be synchronized with each other before initiating a D2D direct communication session. For device synchronization, the UEs within the cell of the base station eNB, may use the LTE Device-to-Device (D2D) discovery and communication service of the 3GPP LTE Release 12 (or higher) or 5th generation (5G) wireless communications technology. The D2D Discovery service enables UE1 and UE2 to use the LTE radio interface of the base station eNB to discover the presence of other D2D-capable devices in the vicinity.

Figure 2B is a network and functional block diagram of the base station eNB 20 and two user equipment devices UE1 21 and UE2 22 of Figure 2A, wherein the two user equipment devices engage in a device discovery process.

In one example embodiment, the D2D UEs may use conventional <6 GHz band device discovery procedures, using procedures similar to the IEEE 802.11 P2P Device Discovery, which consists of the UE1 and UE2 exchanging Probe Request and Probe Response frames to exchange device information.

In another example embodiment, the D2D UEs within the cell of the base station eNB, may use the LTE Device-to-Device (D2D) discovery and communication service of the 3GPP LTE Release 12 (or higher) or 5th generation (5G) wireless communications technology. The D2D Discovery service enables UE1 and UE2 to use the LTE radio interface of the base station eNB to discover the presence of other D2D-capable devices in the vicinity.

Once the devices UE and UE2 discover one another, they may initiate a D2D direct communication session. The device UE1 may measure the channel quality information of signals from device UE2 and the device UE2 may measure the channel quality information of signals from the device UE1.

UE1 and UE2 are within D2D range for a lower frequency (<6 GHz) band radio link, but have poor mmWave line-of-sight. Device UE1 measures channel quality information from UE2: CQI1 from UE2 to UE1, for a lower frequency (<6 GHz) band channel. Device UE2 measures channel quality information from UE1: CQI2 from UE1 to UE2, for a lower frequency (<6 GHz) band channel, in accordance with the invention.

The channel quality information CQI1 from UE2 to UE1, for a lower frequency (<6 GHz) band channel may be an observed signal-to-interference-plus-noise ratio (SINR) of pilot or reference signals received at the UE1. The channel quality information CQI2 from UE1 to UE2, for a lower frequency (<6 GHz) band channel may be an observed signal-to-interference-plus-noise ratio (SINR) of pilot or reference signals received at the UE2.

Figure 2C is a network and functional block diagram of the base station eNB 20 and two user equipment devices UE1 21 and UE2 22 of Figure 2A, wherein the two user equipment devices transmit scheduling requests for a direct device-to-device (D2D) link to the base station eNB.

The eNB will need the following information from each device UE1 and UE2 for a D2D direct link scheduling. This information may be part of the scheduling request or it may be sent separately. For example, for the device UE1, the eNB will need the following information from device UE1:
(i) BSR - Buffer Status Report - the size of data the UE1 has to transmit to UE2;
(ii) CQI - the channel quality information (a part of channel state information) seen by UE1 from UE2 on different channels for frequency selective scheduling; and
(iii) PHR - Power Headroom Report of UE1, to determine how many physical resource blocks (PRBs) UE1 may support for transmitting with a certain power per PRB.

In the case of bi-directional D2D communication, UE1 has data to transmit to UE2 and UE2 has data to transmit to UE1. BSR1 is the size of data from UE1 to UE2. BSR2 is the size of data from UE2 to UE1. If both BSR1 and BSR2 are greater than zero, then there is a need for bi-directional D2D communication for data.

In accordance with the invention, the eNB receives both BSR1 and BSR2 as part of the scheduling request from UE1 and UE2, or as separate buffer state reports from both the UEs. Both buffer sizes are used at the time of scheduling so that the eNB understands the amount of information that needs to be transmitted between the UEs, to avoid over allocating PRBs.

CSI (channel state Information) contains the CQI (channel quality information) for a UE performing the Uplink communication to the eNB. In the case of D2D communication, the CQI from the receiver UE to the transmitter UE is provided to the eNB so that the right set of PRBs may be allocated by the eNB to the transmitter UE to perform a D2D communication with the receiver UE. CSI/CQI reports may be configured to send periodically or along with the scheduling request.

In accordance with the invention, four CQI informations are needed. CQI1 from UE2 to UE1, which is available with UE1; CQI2 from UE1 to UE2 available with UE2; CQI_CL1, the cellular link CQI from eNB to UE1 available with UE1; and CQI_CL2, the cellular link CQI from eNB to UE2 available with UE2. The CQI report may be configured by the eNB for an average CQI for the one frequency band or for each of the sub frequencies.

To perform resource scheduling, the eNB selects the frequency band with highest CQI. If both CQI1 and CQI2 for mmWave is higher, then a D2D Direct Bi-directional link may be scheduled between UE1 and UE2 for transmitting data each other.

If both CQI1 and CQI2 are lower for mmWave and CQI_CL1 and CQI_CL2 are higher for mmWave, then the eNB may schedule a conventional cellular link with eNB as a relay for transferring data from UE1 to UE2 and from UE2 to UE1, after checking the resources available for the downlink.

If both CQI1 and CQI2 are lower for mmWave and one of the CQI_CL1 and CQI_CL2 is higher for mmWave, then the eNB may schedule a mix of D2D direct link and a one hop cellular link for transmitting data between UE1 and UE2, in accordance with this invention.

In the example shown in Figure 2C, Device UE1 has a good mmWave line-of-sight to eNB and transmits to eNB over the mmWave band radio link, a scheduling request, including its frequency band choice FB_{UE} = lower frequency (<6 GHz) band, BSR1 size of data from UE1 to UE2, channel quality information from UE2 and eNB: CQI1 from UE2 to UE1 and CQI_CL1, CQI from eNB to UE1. Device UE2 has poor mmWave line-of-sight to eNB and, thus transmits to eNB over the lower frequency (<6 GHz) band radio link, a scheduling request, including its frequency band choice FB_{UE} = lower frequency (<6 GHz) band, BSR2 size of data from UE2 to UE1, channel quality information from UE1 and eNB: CQI2 from UE1 to UE2 and CQI_CL2, CQI from eNB to UE2. The scheduling request from each device, UE1 and UE2, also contains a power headroom report (PHR) of the respective device, in accordance with the invention.

Figure 2D is a functional block diagram of the base station eNB 20 and a flow diagram of a programmed method executed by the base station eNB, to select between the bidirectional direct device-to-device (D2D) link of Figure 1A and a mixed communication session of Figure 1B, in accordance with the invention.

After the base station eNB receives the scheduling requests for a direct device-to-device (D2D) link from one or both two user equipment devices UE1 and/or UE2, the resource control 162 in the base station eNB, generates the resource allocations to be used by the UEs for communicating over the scheduled links. The flow diagram 200 represents a programmed method executed by the processor module 152 of the base station eNB, to select between the bidirectional direct device-to-device (D2D) link of Figure 1A and a mixed communication session of Figure 1B. The steps of the flow diagram represent computer code instructions stored in the RAM and/or ROM memory, which when executed by the central processing units (CPU), carry out the functions of the example embodiments of the invention. The steps may be carried out in another order than shown and individual steps may be combined or separated into component steps. The flow diagram has the following steps:
Step 202 starts the method, which proceeds to step 204. In Step 204, the base station eNB receives the scheduling requests from UE1 and UE2 for a direct device-to-device (D2D) link. The scheduling request from UE1 includes its frequency band choice FB_{UE} = lower frequency (<6 GHz) band, BSR1 size of data from UE1 to UE2, channel quality information from UE2 and eNB: CQI1 from UE2 to UE1 and CQI_CL1, CQI from eNB to UE1. The scheduling request from UE2 includes its frequency band choice FB_{UE} = lower frequency (<6 GHz) band, BSR2 size of data from UE2 to UE1, channel quality information from UE1 and eNB: CQI2 from UE1 to UE2 and CQI_CL2, CQI from eNB to UE2. The scheduling request from each device, UE1 and UE2, also contains a power headroom report (PHR) of the respective device, in accordance with the invention.

Step 206 determines if the scheduling requests include the frequency band choice, FB_{UE} = mmWave band. If the frequency band choice, FB_{UE} = mmWave band is requested and if both CQI1 and CQI2 for mmWave is higher, then a D2D Direct Bi-directional link may be scheduled between UE1 and UE2 for transmitting data each other.

The eNB schedules a bidirectional, direct device-to-device link between the UE1 and UE2 devices, using the high frequency mmWave band, if the device-to-device channel quality information CQI1 and CQI2 of the UE1 and UE2 devices meets a first predefined criterion for the high frequency band. The first predefined criterion may be a value of the observed signal-to-interference-plus-noise ratio (SINR) of mmWave band pilot or reference signals received at the UE1 and UE2 devices, the value being greater than a predefined value.

The method proceeds from Step 206 to Step 214 and the resource control 162 generates the resource allocations to schedule a bidirectional D2D direct link using the high frequency band mmWave in both directions.

If Step 206 determines that the scheduling request does not include the frequency band choice, FB_{UE} = mmWave band, then then the method proceeds to Step 208 to determine whether at least one of the devices UE1 or UE2 is capable of transmitting the high frequency band, for example that it has a good line-of-sight (LOS) to the base station eNB.

Step 208 determines whether at least one of the devices UE1 or UE2 is capable of transmitting the high frequency band. If both CQI1 and CQI2 are lower for mmWave and one of the CQI_CL1 and CQI_CL2 is higher for mmWave, then the eNB may schedule a mix of D2D direct link and a one hop cellular link for transmitting data between UE1 and UE2, in accordance with this invention.

The eNB schedules a mixed communication session comprising a unidirectional, direct device-to-device link to transmit second data (b1...b4) from the UE2 device to the UE1 device using the lower frequency (<6 GHz) band, and a unidirectional link to transmit first data (a1...a4) from the UE1 device to the base station eNB using the high frequency mmWave band, the base station eNB acting as a relay to forward the first data (a1...a4) to the UE2 device, if the device-to-device channel quality information CQI1 and CQI2 of the UE1 and UE2 devices does not meet the first predefined criterion for the high frequency mmWave band and if the device-to-network node channel quality information CQI_CL1 for the UE1 device to the base station eNB meets a second predefined criterion for the high frequency band. The second predefined criterion may be a value of the observed signal-to-interference-plus-noise ratio (SINR) of mmWave band pilot or reference signals received at the UE1 from the eNB base station, the value being greater than a predefined value. The first predefined criterion may be the same or it may be different than the second predefined criterion.

The method proceeds from Step 208 to Step 210 to determine whether the base station eNB has available downlink resources. If the resources requested are from a low frequency band and at the same time if the buffer sizes of both UEs are non-zero, then the eNB will try to find out whether a cellular link to any one of the UE can use the high frequency band mmWave.

If Step 210 determines that the base station eNB has available downlink resources, then the method proceeds to Step 212, and the resource control 162 generates the resource allocations to schedule a mixed communication session, as shown in Figure 1B. The resource control 162 generates resource allocation 66 specifying a unidirectional, direct device-to-device D2D link to transmit second data b1, b2, b3, and b4 from device UE2 to device UE1 using the lower frequency (<6 GHz) band. The resource control 162 generates resource allocation 62 specifying a unidirectional link to transmit first data a1, a2, a3, and a4 from the device UE1 to the base station eNB using the high frequency band mmWave. The resource control 162 generates resource allocation 64 specifying a unidirectional link to transmit the first data a1, a2, a3, and a4 from the base station eNB acting as a relay to forward the first data to the UE2 device.

If Step 208 determines that neither of the devices UE1 or UE2 is capable of transmitting the high frequency band, then the method proceeds to Step 216, wherein the resource control 162 generates resource allocations 52 and 56 to schedule a bidirectional D2D direct link using <6GHz in both directions.

If Step 210 determines that the base station eNB does not have available downlink resources, then the method proceeds to Step 216, wherein the resource control 162 generates resource allocations 52 and 56 to schedule a bidirectional D2D direct link using <6GHz in both directions.

The resource allocations are transmitted by the mmWave module 160 of the base station eNB to control the mmWave module 130 and are transmitted by the <6 GHz band module 170 of the base station eNB to control the <6 GHz band module 140 in the user equipment devices UE1 and UE2.

Figure 2E is a network and functional block diagram of the base station eNB 20 and two user equipment devices UE1 21 and UE2 22 of Figure 2A, wherein the two user equipment devices receive resource allocations from the base station eNB, to setup a resource pool for the mixed communication session of Figure 1B. Device UE1 has a good mmWave line-of-sight to eNB and receives its resource allocations from the base station eNB over the mmWave band radio link. Device UE2 has poor mmWave line-of-sight to eNB and, thus receives its resource allocations from the base station eNB over the lower frequency (<6 GHz) band radio link, in accordance with the invention.

In the example shown, the resource control 162 generates the resource allocations to schedule a mixed communication session, as shown in Figure 1B. The resource control 162 generates resource allocation 66 specifying a unidirectional, direct device-to-device D2D link to transmit second data b1, b2, b3, and b4 from device UE2 to device UE1 using the lower frequency (<6 GHz) band. The resource control 162 generates resource allocation 62 specifying a unidirectional link to transmit first data a1, a2, a3, and a4 from the device UE1 to the base station eNB using the high frequency band mmWave. The resource control 162 generates resource allocation 64' specifying a unidirectional link to receive the first data a1, a2, a3, and a4 at device UE2 from the base station eNB. The resource control 162 generates resource allocation 66' specifying a unidirectional, direct device-to-device D2D link to receive second data b1, b2, b3, and b4 at device UE1 from device UE2 using the lower frequency (<6 GHz) band.

The resource control 132 responds to the resource allocations in the resource pool buffer 128 received from the base station eNB, to control the mmWave module 130 and the <6 GHz band module 140 in accordance with the specified set of transmission time intervals and frequency resources to be used by the UEs for communicating over the scheduled links in the specified transmission time intervals.

The resource pool may be used for the D2D communication by the UEs for the transmission of data and feedback. By allocating a resource pool, the eNB need not schedule the D2D UEs on every TTI. This way the eNB may save on resources on signaling in both directions from UEs to the eNB and back on every TTI. Once a resource pool is allocated by the eNB for the D2D link between the two D2D UEs, the UEs may choose autonomously a subset of resources from the pool and transmit data to the other UE. If a UE is transmitting in the D2D link, the other UE has to listen and it cannot transmit at the same time, since the resources for the D2D link are given only from the uplink resources as per the present state of art.

The resource pool allocated by the eNB for the D2D communication is valid only for certain time interval. Once the resource pool's validity period is over, the UEs participating in the D2D communication again send a scheduling request to the eNB and the eNB allocates another resource pool to the participating UEs. By this way eNB can change the number of resources and time of validity of the resource pool with the changes in RF conditions and the buffer status of the UEs.

Figure 2F is a network and functional block diagram of the base station eNB and two user equipment devices UE1 and UE2 of Figure 2A, illustrating the mixed communication session of Figure 1B. The lower frequency (<6 GHz) band radio is used for unidirectional transmission of traffic from UE2 to UE1, over the D2D link 32 in the direction from UE2 to UE1. The high frequency mmWave band radio is used for unidirectional transmission of traffic from UE1 to UE2, in the direction from UE1 over link 34 to the base station eNB, the base station eNB acting as a relay to forward the traffic to UE2. The lower frequency (<6 GHz) band radio is used for unidirectional transmission of traffic from UE1 to UE2, in the direction from the base station eNB to UE2 over link 36, in accordance with the invention.

In accordance with the invention, the D2D direct link is scheduled in one direction and cellular link in the other direction by allocating a resource pool for the D2D direct link and UL resources for the cellular link. The "transmit alone" resource pool is allocated for the D2D UE which is transmitting over D2D direct communication and the "receive alone" resource pool is allocated for the listening D2D UE which is receiving in the D2D direct link. Since the data and the signals from the receiver D2D UE to the transmitter is through a one hop cellular link, receiver D2D is scheduled in the uplink periodically to transmit its data and signal to the eNB. Here the signal may include the HARQ ACK/NACK and CSI feedback for the transmitter D2D UE. The eNB forwards these signals and data periodically by scheduling a downlink transmission to the D2D UE doing the direct D2D transmission.

The resource pool for unidirectional D2D link is valid over a period defined by certain number of TTIs. Once the resource pool's validity is over the D2D transmitter again request from the eNB for a new resource pool for the D2D direct communication. This message will contain the buffer status and the latest CQI as seen by the receiver. In this communication of a mix D2D direct and cellular communication, since the eNB receives and forwards the CQI information from the receiver, the CQI need not be sent by the transmitter while sending scheduling request. The D2D direct receiver is receiving over the D2D direct link and also transmitting to the eNB on a cellular link. For the uplink scheduling in proper frequency band, the receiver UE periodically sends its CSI/CQI feedback on all frequency bands to the eNB. Thus the eNB can control resources and links based on the changes in the RF conditions with time.

Figure 2G is a network and functional block diagram of the base station eNB 20 and two user equipment devices UE1 21 and UE2 22 of Figure 2F, illustrating example effects of the device UE2 moving closer to eNB and now having a good mmWave line-of-sight to eNB. The eNB is then able to use the high frequency mmWave band radio for the unidirectional transmission of the forwarded traffic from UE1 to UE2, in the link 36' directed from the base station eNB to UE2. The resource control 162 generates resource allocation 64" specifying a unidirectional mmWave band radio link to receive the first data a1, a2, a3, and a4 at device UE2 from the base station eNB, with all four packets a1, a2, a3 and a4 transmitted over link 36 during one TTI, in accordance with the invention.

Figure 3A is a signal sequence diagram of the mixed communication session of Figure 1B, wherein the lower frequency (<6 GHz) band radio is used for unidirectional transmission of traffic from UE2 22 to UE1 21, over the D2D link in the direction from UE2 to UE1, and the high frequency mmWave band radio is used for unidirectional transmission of traffic from UE1 to UE2, in the direction from UE1 to the base station eNB 20, the base station eNB acting as a relay to forward the traffic to UE2, in accordance with the invention.

The sequence diagram of Figure 3A shows:
Device UE1 sending to eNB, a Scheduling Request, BSR, and Channel Quality Measurements from eNB and from UE2.

Device UE2 sending to eNB, a Scheduling Request, BSR, and Channel Quality Measurements from eNB and from UE1.

The eNB responds by setting D2D UE2 as TX for D2D direct transmit to D2D UE1, and assign resources for TX.

The eNB responds by setting D2D UE1 as RX for D2D direct Tx from D2D UE2, assign resources for RX.

Device UE2 performing a D2D Direct Transmission of Data to UE1.

Device UE1 performing a Cellular UL Transmission of Data to the eNB.

The eNB then relays the data by Cellular DL Transmission of Data to UE2.

In the unidirectional D2D communication, the eNB sets up two D2D UEs to do a direct D2D communication from one UE (UE1) to another UE (UE 2) and on the reverse direction a cellular communication using an uplink and a downlink from UE2 to UE1. The conditions to establish this kind of communication by eNB depends on the received parameters from UEs, such as BSRs, Channel Quality measurements and the available resources for scheduling UL/DL. For example, if one UE has a good line-of-sight (LOS) with the eNB and can use the mmWave band for UL communication, the eNB may choose to use the mix of D2D direct and cellular communication, as in Figure 1B. Instead, for example, if both the cellular links from the UEs are do not have a good line-of-sight (LOS) and the use of the high frequency band is not feasible, then the eNB may decide to switch to the bidirectional D2D communication, as in Figure 1A.

Figure 3B is a signal sequence diagram of the bidirectional direct device-to-device (D2D) link of Figure 1A, between the first user equipment UE1 21 and the second user equipment UE2 22 located in the cell controlled by the base station eNB 20, wherein the base station eNB is programmed to select between the bidirectional direct device-to-device (D2D) link of Figure 1A and a mixed communication session of Figure 1B, in accordance with the invention.

The sequence diagram of Figure 3B shows:
Device UE1 sending to eNB, a Scheduling Request, BSR, and Channel Quality Measurements from eNB and from UE2.

Device UE2 sending to eNB, a Scheduling Request, BSR, and Channel Quality Measurements from eNB and from UE1.

The eNB responds by setting D2D UE2 as TX and RX for D2D direct transmission between UE1 and UE2.

The eNB responds by setting Set D2D UE1 as TX and RX for D2D direct transmission between UE1 and UE2.

Device UE1 performing D2D Direct Transmission of Data to UE2.

Device UE2 performing D2D Direct Transmission of Data to UE1.

The switching decision between the unidirectional and bidirectional D2D communication can happen every time the eNB receives fresh parameters from the participating UEs. The scheduling request, BSR reports and Channel Quality measurement reports are sent to eNB by all radio resources control (RRC)_connected UEs at regular intervals. The eNB can configure the interval at which the UEs should send these reports to the eNB. Once the reports are received by the eNB, it can decide whether to keep the present mode of D2D communication or to switch to the other mode.

Figure 4 is a flow diagram 400 of a programmed method executed by the base station eNB, to select between the bidirectional direct device-to-device (D2D) link of Figure 1A and a mixed communication session of Figure 1B, in accordance with the invention. The steps of the flow diagram represent computer code instructions stored in the RAM and/or ROM memory, which when executed by the central processing units (CPU), carry out the functions of the example embodiments of the invention. The steps may be carried out in another order than shown and individual steps may be combined or separated into component steps. The flow diagram has the following steps:
Step 402: receiving, by a network node, a request from each of a first and a second wireless device, to schedule a device-to-device direct communication session between the first and second wireless devices, each request including device-to-device channel quality information and device-to-network node channel quality information;
Step 404: scheduling, by the network node, a bidirectional, direct device-to-device link between the first and second wireless devices, using a high frequency band, if the device-to-device channel quality information of the first and second wireless devices meets a first predefined criterion for the high frequency band; and
Step 406: scheduling, by the network node, a mixed communication session comprising a unidirectional, direct device-to-device link to transmit second data from the second wireless device to the first wireless device using a lower frequency band than the high frequency band, and a unidirectional link to transmit first data from the first wireless device to the network node using the high frequency band, the network node acting as a relay to forward the first data to the second wireless device, if the device-to-device channel quality information of the first and second wireless devices does not meet the first predefined criterion for the high frequency band and if the device-to-network node channel quality information for the first wireless device to the network node meets a second predefined criterion for the high frequency band.

Figure 5 illustrates an example embodiment of the invention, wherein examples of removable storage media are shown for RAM and/or ROM memories 126/156 and/or 127/157, based on magnetic, electronic and/or optical technologies, such as magnetic disks, optical disks, semiconductor memory circuit devices and micro-SD memory cards (SD refers to the Secure Digital standard) for storing data and/or computer program code as an example computer program product, in accordance with at least one embodiment of the present invention.

Although two frequency bands, the low frequency band (<6 GHz) and high frequency band (mmWave), are disclosed in example embodiments of the invention, it should be understood that example embodiments of the invention may operate in other frequency bands. Also, it should be noted that example embodiments of the invention may use the same frequency band for establishing a mix of both a link from one mobile wireless device to a base station and a direct device-to-device (D2D) link between the two mobile wireless devices. Using the same frequency band may provide higher gains in configurations where one device is close to the base station and its CQI to the base station is much higher than the direct device-to-device CQI.

Using the description provided herein, the embodiments may be implemented as a machine, process, or article of manufacture by using standard programming and/or engineering techniques to produce programming software, firmware, hardware or any combination thereof.

Any resulting program(s), having computer-readable program code, may be embodied on one or more computer-usable non-transitory media such as resident memory devices, smart cards or other removable memory devices, thereby making a computer program product or article of manufacture according to the embodiments.

As indicated above, memory/storage devices include, but are not limited to, disks, optical disks, removable memory devices such as smart cards, SIMs, WIMs, semiconductor memories such as RAM, ROM, PROMS, etc. Transmitting mediums include, but are not limited to, transmissions via wireless communication networks, the Internet, intranets, telephone/modem-based network communication, hard-wired/cabled communication network, satellite communication, and other stationary or mobile network systems/communication links.

## Claims

1. A method, comprising:
receiving (402), by a network node, a request from each of a first and a second wireless device, to schedule a device-to-device direct communication session between the first and second wireless devices, each request including device-to-device channel quality information and device-to-network node channel quality information;
scheduling (406), by the network node, a mixed communication session comprising a unidirectional, direct device-to-device link to transmit second data from the second wireless device to the first wireless device using a frequency band below 6 GHz, and a unidirectional link to transmit first data from the first wireless device to the network node using a frequency band between 10 and 300 GHz, the network node acting as a relay to forward the first data to the second wireless device, if the device-to-device channel quality information of the first and second wireless devices does not meet a first predefined criterion for the frequency band between 10 and 300 GHz and if the device-to-network node channel quality information for the first wireless device to the network node meets a second predefined criterion for the frequency band between 10 and 300 GHz.

2. The method of claim 1, wherein the mixed communication session further comprises:
scheduling, by the network node, a unidirectional link to forward the first data from the network node to the second wireless device using the frequency band below 6 GHz, if the device-to-network node channel quality information for the second wireless device to the network node does not meet the second predefined criterion for the frequency band between 10 and 300 GHz.

3. The method of claim 1, wherein the mixed communication session further comprises:
scheduling, by the network node, a unidirectional link to forward the first data from the network node to the second wireless device using the frequency band between 10 and 300 GHz, if the device-to-network node channel quality information for the second wireless device to the network node meets the second predefined criterion for the frequency band between 10 and 300 GHz.

4. The method of any of the claims 1-3, wherein the request from each of the first and second wireless devices includes a buffer status report of a quantity of data each device has to transmit to the other device.

5. The method of any of the claims 1-4, wherein the scheduling further comprises:
transmitting, by the network node, to the first and second wireless devices, a resource allocation pool comprising a specification of a set of transmission time intervals and frequency resources to be used by the first and second wireless devices for communicating over the scheduled links in the specified transmission time intervals, without requiring the network node to transmit a new schedule during each transmission time interval.

6. A computer program product comprising computer readable program code configured to cause performing of the method of any of the preceding claims when said program is run on a computer.

7. The computer program product of claim 6, wherein the computer program is a computer program product comprising a computer-readable medium bearing computer program code embodied therein for use with a computer.

8. An apparatus (20), comprising:
means (152, 160,162,163,164,166, 170,173,174,176) for receiving a request from each of a first and a second wireless device, to schedule a device-to-device direct communication session between the first and second wireless devices, each request including device-to-device channel quality information and device-to-network node channel quality information;
means (152,162,170,173,174,176) for scheduling a mixed communication session comprising a unidirectional, direct device-to-device link to transmit second data from the second wireless device to the first wireless device using a frequency band below 6 GHz , and a unidirectional link to transmit first data from the first wireless device to the network node using a frequency band between 10 and 300 GHz, the network node acting as a relay to forward the first data to the second wireless device, if the device-to-device channel quality information of the first and second wireless devices does not meet a first predefined criterion for the frequency band between 10 and 300 GHz and if the device-to-network node channel quality information for the first wireless device to the network node meets a second predefined criterion for the frequency band between 10 and 300 GHz.

9. The apparatus of claim 8, further comprising:
means for scheduling a unidirectional link to forward the first data from the network node to the second wireless device using the frequency band below 6 GHz, if the device-to-network node channel quality information for the second wireless device to the network node does not meet the second predefined criterion for the frequency band between 10 and 300 GHz.

10. The apparatus of claim 8, further comprising:
means for scheduling a unidirectional link to forward the first data from the network node to the second wireless device using the frequency band between 10 and 300 GHz, if the device-to-network node channel quality information for the second wireless device to the network node meets the second predefined criterion for the frequency band between 10 and 300 GHz.

11. The apparatus of any of the claims 8-10, wherein the request from each of the first and second wireless devices includes a buffer status report of a quantity of data each device has to transmit to the other device.

12. The apparatus of any of the claims 8-11, wherein the scheduling further comprises:
transmitting, by the network node, to the first and second wireless devices, a resource allocation pool comprising a specification of a set of transmission time intervals and frequency resources to be used by the first and second wireless devices for communicating over the scheduled links in the specified transmission time intervals, without requiring the network node to transmit a new schedule during each transmission time interval.

## Patentansprüche

1. Verfahren, das Folgendes umfasst:
Empfangen (402), durch einen Netzknoten, einer Anforderung von sowohl einer ersten als auch einer zweiten drahtlosen Einrichtung zum Planen einer Einrichtung-zu-Einrichtung-Direktkommunikationssitzung zwischen der ersten und der zweiten drahtlosen Einrichtung, wobei jede Anforderung Einrichtung-zu-Einrichtung-Kanalqualitätsinformationen und Einrichtung-zu-Netzknoten-Kanalqualitätsinformationen beinhaltet; Planen (406), durch den Netzknoten, einer gemischten Kommunikationssitzung, die einen unidirektionalen direkten Einrichtung-zu-Einrichtung-Link zum Übertragen zweiter Daten von der zweiten drahtlosen Einrichtung zu der ersten drahtlosen Einrichtung unter Verwendung eines Frequenzbandes unter 6 GHz und einen unidirektionalen Link zum Übertragen erster Daten von der ersten drahtlosen Einrichtung zu dem Netzknoten unter Verwendung eines Frequenzbandes zwischen 10 und 300 GHz umfasst, wobei der Netzknoten als ein Relais zum Weiterleiten der ersten Daten zu der zweiten drahtlosen Einrichtung fungiert, falls die Einrichtung-zu-Einrichtung-Kanalqualitätsinformationen der ersten und der zweiten drahtlosen Einrichtung nicht ein erstes vordefiniertes Kriterium für das Frequenzband zwischen 10 und 300 GHz erfüllen und falls die Einrichtung-zu-Netzknoten-Kanalqualitätsinformationen für die erste drahtlose Einrichtung zu dem Netzknoten ein zweites vordefiniertes Kriterium für das Frequenzband zwischen 10 und 300 GHz erfüllen.

2. Verfahren nach Anspruch 1, wobei die gemischte Kommunikationssitzung ferner Folgendes umfasst: Planen, durch den Netzknoten, eines unidirektionalen Links zum Weiterleiten der ersten Daten vom Netzknoten zu der zweiten drahtlosen Einrichtung unter Verwendung des Frequenzbandes unter 6 GHz, falls die Einrichtung-zu-Netzknoten-Kanalqualitätsinformationen für die zweite drahtlose Einrichtung zu dem Netzknoten nicht das zweite vordefinierte Kriterium für das Frequenzband zwischen 10 und 300 GHz erfüllen.

3. Verfahren nach Anspruch 1, wobei die gemischte Kommunikationssitzung ferner Folgendes umfasst: Planen, durch den Netzknoten, eines unidirektionalen Links zum Weiterleiten der ersten Daten vom Netzknoten zu der zweiten drahtlosen Einrichtung unter Verwendung des Frequenzbandes zwischen 10 und 300 GHz, falls die Einrichtung-zu-Netzknoten-Kanalqualitätsinformationen für die zweite drahtlose Einrichtung zu dem Netzknoten das zweite vordefinierte Kriterium für das Frequenzband zwischen 10 und 300 GHz erfüllen.

4. Verfahren nach einem der Ansprüche 1-3, wobei die Anforderung von sowohl der ersten als auch der zweiten drahtlosen Einrichtung einen Pufferstatusbericht einer Datenmenge, die jede Einrichtung zu der anderen Einrichtung übertragen muss, beinhaltet.

5. Verfahren nach einem der Ansprüche 1-4, wobei das Planen ferner Folgendes umfasst:
Übertragen, durch den Netzknoten, zu der ersten und der zweiten drahtlosen Einrichtung, eines Ressourcenzuweisungspools, der eine Spezifikation eines Satzes von Übertragungszeitintervallen und Frequenzressourcen, die durch die erste und die zweite drahtlose Einrichtung zum Kommunizieren über die geplanten Links in den spezifizierten Übertragungszeitintervallen zu verwenden sind, umfasst, ohne zu erfordern, dass der Netzknoten einen neuen Plan während jedes Übertragungszeitintervalls übertragen muss.

6. Computerprogrammprodukt, das computerlesbaren Programmcode umfasst, der dazu ausgelegt ist, das Durchführen des Verfahrens nach einem der vorangegangenen Ansprüche zu veranlassen, wenn das Programm auf einem Computer ausgeführt wird.

7. Computerprogrammprodukt nach Anspruch 6, wobei es sich bei dem Computerprogramm um ein Computerprogrammprodukt handelt, das ein computerlesbares Medium umfasst, das darin umgesetzten Computerprogrammcode zur Verwendung mit einem Computer trägt.

8. Vorrichtung (20), die Folgendes umfasst:
Mittel (152, 160, 162, 163, 164, 166, 170, 173, 174, 176) zum Empfangen einer Anforderung von sowohl einer ersten als auch einer zweiten drahtlosen Einrichtung zum Planen einer Einrichtung-zu-Einrichtung-Direktkommunikationssitzung zwischen der ersten und der zweiten drahtlosen Einrichtung, wobei jede Anforderung Einrichtung-zu-Einrichtung-Kanalqualitätsinformationen und Einrichtung-zu-Netzknoten-Kanalqualitätsinformationen beinhaltet; Mittel (152, 162, 170, 173, 174, 176) zum Planen einer gemischten Kommunikationssitzung, die einen unidirektionalen direkten Einrichtung-zu-Einrichtung-Link zum Übertragen zweiter Daten von der zweiten drahtlosen Einrichtung zu der ersten drahtlosen Einrichtung unter Verwendung eines Frequenzbandes unter 6 GHz und einen unidirektionalen Link zum Übertragen erster Daten von der ersten drahtlosen Einrichtung zu dem Netzknoten unter Verwendung eines Frequenzbandes zwischen 10 und 300 GHz umfasst, wobei der Netzknoten als ein Relais zum Weiterleiten der ersten Daten zu der zweiten drahtlosen Einrichtung fungiert, falls die Einrichtung-zu-Einrichtung-Kanalqualitätsinformationen der ersten und der zweiten drahtlosen Einrichtung nicht ein erstes vordefiniertes Kriterium für das Frequenzband zwischen 10 und 300 GHz erfüllen und falls die Einrichtung-zu-Netzknoten-Kanalqualitätsinformationen für die erste drahtlose Einrichtung zu dem Netzknoten ein zweites vordefiniertes Kriterium für das Frequenzband zwischen 10 und 300 GHz erfüllen.

9. Vorrichtung nach Anspruch 8, die ferner Folgendes umfasst:
Mittel zum Planen eines unidirektionalen Links zum Weiterleiten der ersten Daten vom Netzknoten zu der zweiten drahtlosen Einrichtung unter Verwendung des Frequenzbandes unter 6 GHz, falls die Einrichtung-zu-Netzknoten-Kanalqualitätsinformationen für die zweite drahtlose Einrichtung zu dem Netzknoten nicht das zweite vordefinierte Kriterium für das Frequenzband zwischen 10 und 300 GHz erfüllen.

10. Vorrichtung nach Anspruch 8, die ferner Folgendes umfasst:
Mittel zum Planen eines unidirektionalen Links zum Weiterleiten der ersten Daten vom Netzknoten zu der zweiten drahtlosen Einrichtung unter Verwendung des Frequenzbandes zwischen 10 und 300 GHz, falls die Einrichtung-zu-Netzknoten-Kanalqualitätsinformationen für die zweite drahtlose Einrichtung zu dem Netzknoten das zweite vordefinierte Kriterium für das Frequenzband zwischen 10 und 300 GHz erfüllen.

11. Vorrichtung nach einem der Ansprüche 8-10, wobei die Anforderung von sowohl der ersten als auch der zweiten drahtlosen Einrichtung einen Pufferstatusbericht einer Datenmenge, die jede Einrichtung zu der anderen Einrichtung übertragen muss, beinhaltet.

12. Vorrichtung nach einem der Ansprüche 8-11, wobei das Planen ferner Folgendes umfasst:
Übertragen, durch den Netzknoten, zu der ersten und der zweiten drahtlosen Einrichtung, eines Ressourcenzuweisungspools, der eine Spezifikation eines Satzes von Übertragungszeitintervallen und Frequenzressourcen, die durch die erste und die zweite drahtlose Einrichtung zum Kommunizieren über die geplanten Links in den spezifizierten Übertragungszeitintervallen zu verwenden sind, umfasst, ohne zu erfordern, dass der Netzknoten einen neuen Plan während jedes Übertragungszeitintervalls übertragen muss.

## Revendications

1. Procédé, comprenant :
la réception (402), par un nœud de réseau, depuis chacun d'un premier et d'un deuxième dispositif sans fil, d'une requête de planification d'une session de communication directe de dispositif à dispositif entre les premier et deuxième dispositifs sans fil, chaque requête comportant des informations de qualité de canal de dispositif à dispositif et des informations de qualité de canal de dispositif à nœud de réseau ;
la planification (406), par le nœud de réseau, d'une session de communication mixte comprenant une liaison unidirectionnelle directe de dispositif à dispositif pour la transmission de deuxièmes données depuis le deuxième dispositif sans fil jusqu'au premier dispositif sans fil au moyen d'une bande de fréquences en dessous de 6 GHz et une liaison unidirectionnelle pour la transmission de premières données depuis le premier dispositif sans fil jusqu'au nœud de réseau au moyen d'une bande de fréquences entre 10 et 300 GHz, le nœud de réseau jouant le rôle d'un relais pour le réacheminement des premières données jusqu'au deuxième dispositif sans fil, si les informations de qualité de canal de dispositif à dispositif des premier et deuxième dispositifs sans fil ne répondent pas à un premier critère prédéfini pour la bande de fréquences entre 10 et 300 GHz et si les informations de qualité de canal de dispositif à nœud de réseau pour le premier dispositif sans fil jusqu'au nœud de réseau répondent à un deuxième critère prédéfini pour la bande de fréquences entre 10 et 300 GHz.

2. Procédé selon la revendication 1, dans lequel la session de communication mixte comprend en outre :
la planification, par le nœud de réseau, d'une liaison unidirectionnelle pour le réacheminement des premières données depuis le nœud de réseau jusqu'au deuxième dispositif sans fil au moyen de la bande de fréquences en dessous de 6 GHz, si les informations de qualité de canal de dispositif à nœud de réseau pour le deuxième dispositif sans fil jusqu'au nœud de réseau ne répondent pas au deuxième critère prédéfini pour la bande de fréquences entre 10 et 300 GHz.

3. Procédé selon la revendication 1, dans lequel la session de communication mixte comprend en outre :
la planification, par le nœud de réseau, d'une liaison unidirectionnelle pour le réacheminement des premières données depuis le nœud de réseau jusqu'au deuxième dispositif sans fil au moyen de la bande de fréquences entre 10 et 300 GHz, si les informations de qualité de canal de dispositif à nœud de réseau pour le deuxième dispositif sans fil jusqu'au nœud de réseau répondent au deuxième critère prédéfini pour la bande de fréquences entre 10 et 300 GHz.

4. Procédé selon l'une quelconque des revendications 1 à 3, dans lequel la requête depuis chacun des premier et deuxième dispositifs sans fil comporte un rapport d'état de tampon d'une quantité de données à transmettre par chaque dispositif à l'autre dispositif.

5. Procédé selon l'une quelconque des revendications 1 à 4, dans lequel la planification comprend en outre :
la transmission, par le nœud de réseau, aux premier et deuxième dispositifs sans fil, d'un pool d'allocations de ressources comprenant une stipulation d'un ensemble d'intervalles de temps de transmission et de ressources en fréquences à utiliser par les premier et deuxième dispositifs sans fil pour la communication sur les liaisons planifiées dans les intervalles de temps de transmission stipulés, sans nécessiter la transmission, par le nœud de réseau, d'un nouveau schéma de planification au cours de chaque intervalle de temps de transmission.

6. Produit-programme d'ordinateur comprenant un code de programme lisible par ordinateur configuré pour entraîner la réalisation du procédé selon l'une quelconque des revendications précédentes lorsque ledit programme est exécuté sur un ordinateur.

7. Produit-programme d'ordinateur selon la revendication 6, dans lequel le programme d'ordinateur consiste en un produit-programme d'ordinateur comprenant un support lisible par ordinateur incorporant un code de programme d'ordinateur destiné à être utilisé avec un ordinateur.

8. Appareil (20), comprenant :
des moyens (152, 160, 162, 163, 164, 166, 170, 173, 174, 176) de réception, depuis chacun d'un premier et d'un deuxième dispositif sans fil, d'une requête de planification d'une session de communication directe de dispositif à dispositif entre les premier et deuxième dispositifs sans fil, chaque requête comportant des informations de qualité de canal de dispositif à dispositif et des informations de qualité de canal de dispositif à nœud de réseau ;
des moyens (152, 162, 170, 173, 174, 176) de planification d'une session de communication mixte comprenant une liaison unidirectionnelle directe de dispositif à dispositif pour la transmission de deuxièmes données depuis le deuxième dispositif sans fil jusqu'au premier dispositif sans fil au moyen d'une bande de fréquences en dessous de 6 GHz et une liaison unidirectionnelle pour la transmission de premières données depuis le premier dispositif sans fil jusqu'au nœud de réseau au moyen d'une bande de fréquences entre 10 et 300 GHz, le nœud de réseau jouant le rôle d'un relais pour le réacheminement des premières données jusqu'au deuxième dispositif sans fil, si les informations de qualité de canal de dispositif à dispositif des premier et deuxième dispositifs sans fil ne répondent pas à un premier critère prédéfini pour la bande de fréquences entre 10 et 300 GHz et si les informations de qualité de canal de dispositif à nœud de réseau pour le premier dispositif sans fil jusqu'au nœud de réseau répondent à un deuxième critère prédéfini pour la bande de fréquences entre 10 et 300 GHz.

9. Appareil selon la revendication 8, comprenant en outre :
des moyens de planification d'une liaison unidirectionnelle pour le réacheminement des premières données depuis le nœud de réseau jusqu'au deuxième dispositif sans fil au moyen de la bande de fréquences en dessous de 6 GHz, si les informations de qualité de canal de dispositif à nœud de réseau pour le deuxième dispositif sans fil jusqu'au nœud de réseau ne répondent pas au deuxième critère prédéfini pour la bande de fréquences entre 10 et 300 GHz.

10. Appareil selon la revendication 8, comprenant en outre :
des moyens de planification d'une liaison unidirectionnelle pour le réacheminement des premières données depuis le nœud de réseau jusqu'au deuxième dispositif sans fil au moyen de la bande de fréquences entre 10 et 300 GHz, si les informations de qualité de canal de dispositif à nœud de réseau pour le deuxième dispositif sans fil jusqu'au nœud de réseau répondent au deuxième critère prédéfini pour la bande de fréquences entre 10 et 300 GHz.

11. Procédé selon l'une quelconque des revendications 8 à 10, dans lequel la requête depuis chacun des premier et deuxième dispositifs sans fil comporte un rapport d'état de tampon d'une quantité de données à transmettre par chaque dispositif à l'autre dispositif.

12. Appareil selon l'une quelconque des revendications 8 à 11, dans lequel la planification comprend en outre :
la transmission, par le nœud de réseau, aux premier et deuxième dispositifs sans fil, d'un pool d'allocations de ressources comprenant une stipulation d'un ensemble d'intervalles de temps de transmission et de ressources en fréquences à utiliser par les premier et deuxième dispositifs sans fil pour la communication sur les liaisons planifiées dans les intervalles de temps de transmission stipulés, sans nécessiter la transmission, par le nœud de réseau, d'un nouveau schéma de planification au cours de chaque intervalle de temps de transmission.
